# EUROPEAN PATENT SPECIFICATION

(11) **EP 2 490 389 B1**
(45) Date of publication and mention of the grant of the patent: **21.10.2015**
(21) Application number: 11290096.4
(22) Date of filing: 18.02.2011
(51) Int. Cl.: H04B 7/185, H04L 27/00, H04W 56/00, H04L 27/233, H04L 27/26

(54) **Apparatus, method and computer program for determining a frequency offset**
Vorrichtung, Verfahren und Computerprogramm zur Bestimmung eines Frequenzversatzes
Appareil, procédé et programme informatique pour déterminer un décalage de fréquence

(43) Date of publication of application: 22.08.2012
(73) Proprietor: ALCATEL LUCENT, 92100 Boulogne-Billancourt (FR)
(72) Inventor: Doetsch, Uwe, 74392 Freudental (DE); Ohm, Michael, 70372 Stuttgart (DE)
(74) Representative: Wetzel, Emmanuelle

(56) References cited:
- EP-A1- 1 722 528
- EP-A1- 1 750 379
- US-A- 5 933 059
- US-A1- 2010 128 808

## Description

Embodiments of the present invention relate to mobile communication systems, and, in particular, to an estimation of a frequency offset in so-called direct air-to-ground (DA2G) communication systems.

### Background

Airlines are currently investigating solutions to provide broadband connectivity for their passengers. Candidates are for instance commercial systems as Long-Term Evolution (LTE), which has been standardized as the successor of the Universal Mobile Telecommunications System (UMTS). For the downlink transmission, i.e. the direction from a base station (BS, NodeB or eNodeB) to a mobile terminal or UE (User Equipment), LTE utilizes Orthogonal Frequency Division Multiple Access (OFDMA) as the physical layer technique which enables high data rate transmission, particularly in frequency selective fading scenarios. LTE as the technology basis for a terrestrial cellular direct air-to-ground (DA2G) communication system is a favorable option for the airlines' continental fleets compared to satellite solutions due to the provision of higher bandwidth at lower cost.

The LTE air interface is optimized for terrestrial cellular networks. In the terrestrial environment there is a lot of fading in a mobile communications channel and propagation loss is often much heavier then free space loss due to the presence of buildings and other obstacles. In the direct air-to-ground scenario, wherein a terrestrial mobile communications network is used for a communication between a mobile terminal located in an aircraft and a ground-located base station, some partial fading may still occur but it will be typically much less severe than the fading that a terrestrial UE on the ground may encounter. Instead, the DA2G scenario is characterized by a wireless communications channel with a dominating line-of-sight (LOS) component. Reflected paths are either negligible or - if observable - at up to 20 dB in power below the direct (LOS) path - with almost the same Doppler shift as the LOS-component. Due to the dominating LOS-component the DA2G scenario is a Doppler shift scenario rather than a Doppler spread scenario as in terrestrial ground-to-ground systems. The Doppler shifts observed in the DA2G scenario relate to aircraft speeds up to 1200 km/h. For example, assuming a center or carrier frequency fc = 2 GHz and a velocity v = 1200 km/h, a maximum Doppler shift f_{Doppler},ₘₐₓ = (v/c)·fc = 2.2 kHz may be observed, wherein c denotes the speed of light.

One of the drawbacks of Orthogonal Frequency Division Multiplexing (OFDM) is its vulnerability to carrier frequency offset. LTE employs a fixed subcarrier spacing of 15 kHz. Hence, when left uncompensated, a carrier frequency shift of e.g. 2.2 kHz due to the Doppler effect may already lead to non-negligible inter-carrier interference destroying the orthogonality between adjacent subcarriers. LTE, however, has been designed for terrestrial use and the use of pilot-aided channel estimation methods in LTE is not sufficient in high-speed direct air-to-ground propagation scenarios. The resulting high Doppler shifts cannot unambiguously be estimated from available pilot signals and thus a proper Doppler compensation on the received and/or transmitted signals is not possible.

In the downlink from a base station to a mobile terminal (i.e. from the base station to an aircraft onboard unit, OBU, in the DA2G scenario) the discrete Doppler shift appears to the mobile terminal receiver or the aircraft onboard unit just as an offset from the base station carrier frequency f_{C,tx} of the transmitted downlink signal. The mobile terminal receiver derives the carrier frequency of the transmitted downlink signal from the received downlink signal by state-of-the-art frequency estimation methods, and cannot distinguish between a frequency offset at the base station transmitter or a frequency shift caused by the Doppler effect. The terminal receiver just adapts to the shifted frequency without any performance impact (within the range of Doppler shifts observed in the DA2G scenario).

For an uplink transmission from the mobile terminal to the base station (i.e. from the aircraft onboard unit to the base station in the DA2G scenario), a mobile terminal transmitter uses a carrier frequency derived from the Doppler shifted base station carrier frequency f_{C,tx} + f_{o,Doppler}. For an LTE FDD (Frequency Division Duplex) system this mobile terminal uplink carrier frequency is the Doppler shifted base station carrier frequency (f_{C,tx} + f_{o,Doppler}) plus a duplex offset Δf_{FDD}. For LTE TDD (Time Division Duplex) it is the Doppler shifted base station carrier frequency (f_{c,tx} + f_{o,Doppler}) As the uplink signal from the mobile terminal transmitter in the aircraft onboard unit also experiences the Doppler shift f_{o,Doppler}, it has a frequency offset of twice the Doppler shift when it reaches the base station.

This frequency offset of twice the Doppler shift can be beyond the estimation capabilities of the base station in the direct air-to-ground scenario. At the same time the base station needs to receive uplink signals from multiple mobile terminals or aircraft onboard units that may have frequency differences of four times the maximum Doppler shift. Four times because one mobile terminal (aircraft) may move away from the base station and another mobile terminal (aircraft) may move towards the base station at maximum allowed speed.

It is thus desirable to perform a Doppler pre-compensation by twice the Doppler shift at the mobile terminals or the aircraft onboard units.

Various concepts of estimating frequency offsets in mobile terminals are known, which are often used for frequency synchronization concepts. For example, US 5 933 059 A relates to a concept for controlling frequency synchronization in a frequency correction feedback loop of a radio telephone. Frequency offset estimation thereby forms a part of said frequency correction feedback loop. However, conventional frequency offset estimation concepts are not well-suited for the direct air-to-ground scenario.

It is known to estimate the Doppler shift in a direct air-to-ground scenario by geometrical calculations based on the knowledge of the ground-located base station positions, which may be stored in a database in the onboard terminal, and the heading and speed of the aircraft obtained from an aircraft navigational system or a GPS (Global Positioning System) receiver built into the onboard terminal. For that reason a mobility client entity may receive GPS information and base station position information and calculate the Doppler shift, which can then be compensated in a specific DA2G processing entity.

This solution has two drawbacks. Firstly, the system relies on GPS or other navigational data. This adds complexity as additional interfaces or components are required. Both the required access to the aircraft data bus carrying navigational data or the required additional GPS antenna limit installation positions inside the aircraft. If the GPS signal or navigational data are corrupted the system cannot be operated. Secondly, an up-to-date database of base stations and their positions is required. If new base stations are added to the communications system or single base station failures appear, the database becomes inaccurate and the system cannot be operated properly at least in parts of the system's coverage area.

Hence, it is desirable to provide improved estimation concepts for estimating speeds or Doppler frequencies in a mobile communications network, in particular in a direct air-to-ground scenario.

### Summary

The present invention is directed to subject-matter as disclosed by the appended claims.

### Brief description of the Figures

Some examples of apparatuses and/or methods will be described in the following by way of example only, and with reference to the accompanying figures, in which
- Fig. 1: shows a schematic block diagram of an apparatus for determining an estimate of a frequency offset according to an example;
- Fig. 2: shows a more detailed block diagram of an apparatus for determining an estimate of a frequency offset according to a further example;
- Fig. 3: shows a block diagram of an apparatus for determining a frequency-offset-estimate according to yet a further example; and
- Fig. 4: shows a schematic flowchart illustrating a method for determining a frequency-offset-estimate according to an example.

### Description of Embodiments

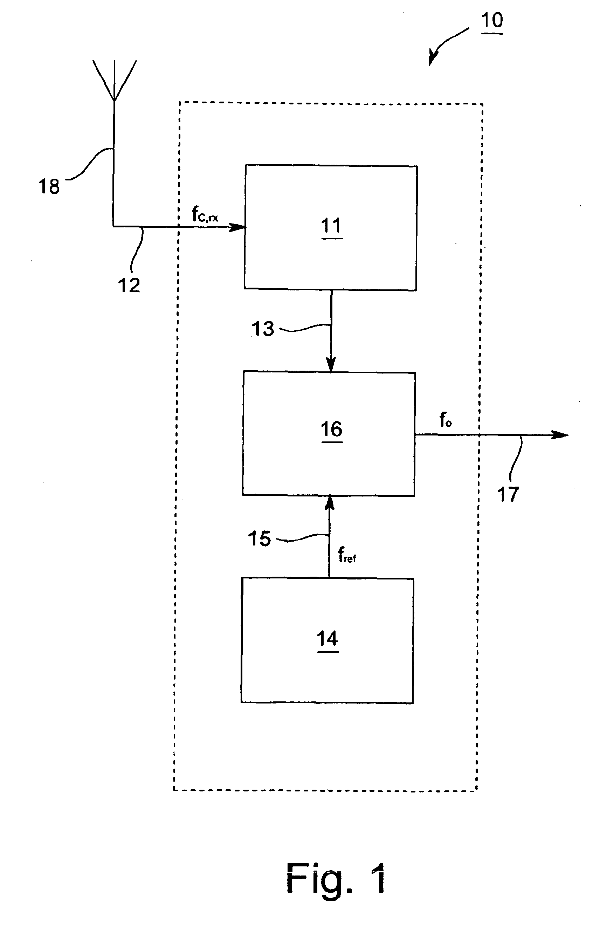

Fig. 1 shows a schematic block diagram of an apparatus 10 for determining an estimate 17 of a frequency offset fₒ between a carrier frequency f_{C,rx} of a received signal 12 and a carrier frequency f_{C,tx} of a transmitted signal.

The apparatus 10 comprises a processor 11 for determining, based on the received signal 12, an estimate 13 of the carrier frequency f_{C,rx} of the received signal 12. The apparatus 10 further comprises a reference signal source 14 for generating a reference signal 15 having a reference frequency f_{ref} corresponding, within a predefined tolerance range Δf_{ref}, to the carrier frequency f_{C,tx} of the transmitted signal. The frequency offset 17 may be estimated by an estimator 16 based on the estimate 13 of the carrier frequency f_{C,rx} of the received signal 12 and the reference frequency f_{ref} of the reference signal 15.

For example, the apparatus 10 may be coupled with or built into a mobile onboard terminal of an aircraft for a direct air-to-ground communication (DA2G) between the aircraft and at least one base station of a terrestrial mobile communications network. In such an example, the apparatus 10 may be employed in order to determine an estimate of a Doppler shift f_{o,Doppler} as the frequency offset fₒ. The movement of the aircraft introduces a Doppler frequency shift. Since the direct air-to-ground communication between the aircraft and a base station is characterized by a dominant line-of-sight channel component between the moving aircraft and the terrestrial base station one may assume a rather discrete Doppler shift instead of a Doppler spectrum, which is more common for non-line-of-sight mobile fading channels.

The received signal 12 may e.g. be interpreted as a downlink signal stemming from the terrestrial base station and transmitted towards the moving aircraft. For its reception the apparatus 10 may be coupled to an antenna or an antenna array 18. In a line-of-sight (LOS) scenario, like the DA2G scenario, an antenna array can be particularly advantageous since receive- as well as transmit-beamforming algorithms may be effectively employed in such LOS-scenarios.

The usage of examples of the apparatus 10 is generally not limited to a processing of OFDM signals. However, the received signal 12 as well as the transmitted signal may be regarded as such OFDM signals, which are used in the downlink of 4^{th} generation mobile communication systems such as LTE. Since LTE is capable of delivering broadband services also to aircraft passengers, some examples of the present invention are directed towards LTE-OFDM/OFDMA. As has been explained before, an uncompensated frequency offset fₒ is particularly critical for OFDM based signals, since this modulation technique relies on mutually orthogonal sub-carriers. For that reason, and in order to avoid severe performance degradations, a frequency offset compensation should be performed before converting a received time-domain OFDM signal into the frequency domain for further processing. In the direct air-to-ground scenario scenario the frequency offset compensation may be performed by adjusting an uplink carrier frequency based on the estimated Doppler shift of the received downlink signal, since a frequency offset of twice the Doppler shift may be beyond the estimation capabilities of the base station in the DA2G scenario, as has been explained before.

According to examples the carrier frequency f_{C,rx} of the received signal (as well as the transmitted signal) may be understood as the center frequency of a used communication band. Hence, the center frequency of the wireless transmitted and/or received signal will depend on an available spectrum, which may differ between different operators and/or different countries. The processor 11, hence, may be adapted to determine the estimate 17 of the carrier frequency f_{C,rx} of the received signal 12 based on the center frequency of a received signal frequency spectrum. The bandwidth of received signal frequency spectrum is dependent on a mode of operation of the wireless communications system. For example, if UMTS/WCDMA was used as the underlying communications system, the received (transmitted) signal bandwidth would be 5 MHz. In LTE-systems a scalable signal bandwidth may vary between 5 MHz, 10 MHz, 15 MHz and 20 MHz.

Examples rely on a highly accurate reference signal source 14 in the mobile terminal operating at the known carrier frequency f_{C,tx} of the base station transmitter. Thereby the reference signal source 14 operates independently from other signal sources used in RF and digital signal processing terminal receiver parts for the received signal 12. The carrier frequencies f_{C,tx} of the base stations may, e.g., be stored in a dedicated digital storage or database comprised by the apparatus 10. Typically, LTE uses a frequency reuse factor of one, which means that adjacent or neighboring cells or base stations will use the same frequency band and, hence, the same transmit carrier or center frequency f_{C,tx}. However, the used carrier frequencies of the base stations may vary for different operators of wireless communications systems, depending on available spectral resources. Hence, the storage in the apparatus 10 may provide different transmit signal carrier frequencies for different network providers.

The frequency offset fₒ caused by the Doppler effect can be estimated by the estimator 16 to be the frequency difference between the highly accurate reference signal 15 having the reference frequency f_{ref} and the estimate 13 of carrier frequency f_{C,rx} of the received downlink signal 12, as the latter corresponds to the carrier frequency f_{C,tx} at the base station transmitter plus the experienced Doppler shift f_{o,Doppler}.

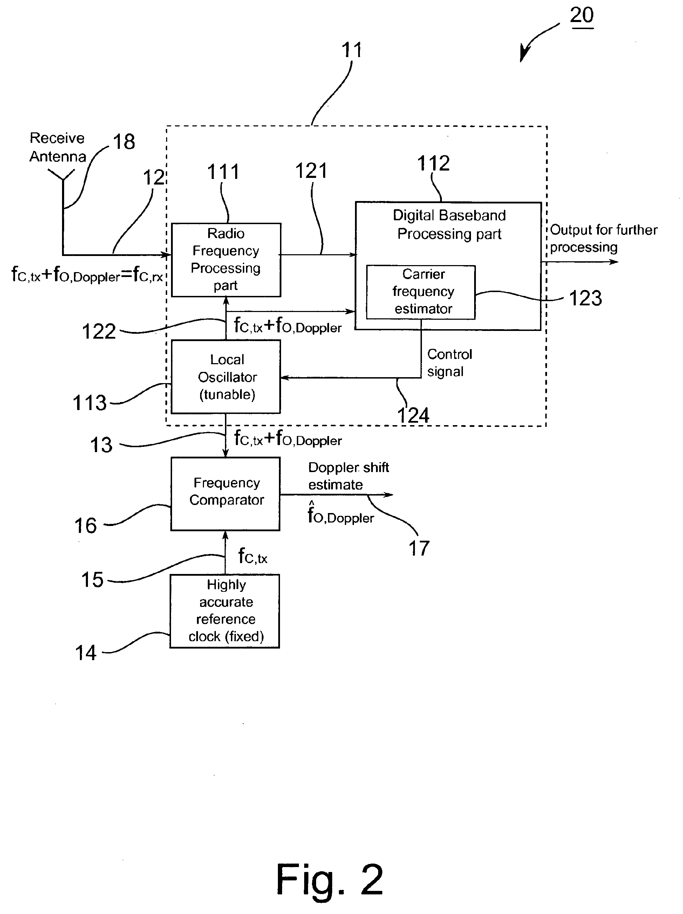

Turning now to Fig. 2, a further example of an apparatus 20 for determining a frequency-offset-estimate will be described. The same reference numerals as in Fig. 1 indicate similar functional components and/or signals.

Here the processor 11 comprises a RF (Radio Frequency) processing part 111, a digital baseband processing part 112 and a tunable local oscillator 113. The radio frequency processing part 111 may be coupled to the receive antenna device 18 such that the received signal 12 is input from the receive antenna device 18 to the RF-processing part 111, which may be an analog RF front-end receiver. Hence, the RF-processing part 111 may comprise electrical circuitry to down-convert the received analog signal 12 from the analog RF-signal domain to an intermediate frequency domain or to an analog or digital baseband domain. A down-converted baseband signal 121 is fed from the RF-processing block 111 to the digital baseband processing block 112. The down-conversion of the received signal 12, having the center or carrier frequency f_{C,rx} corresponding to f_{C,tx} + f_{o,Doppler}, into the intermediate frequency or baseband domain may be achieved by mixing the received signal 12 with an output signal 122 of the tunable local oscillator 113. In examples the tunable local oscillator 113 may be used for a direct down-conversion of the received signal 12 to the baseband domain.

The RF-front-end 111, the digital baseband processor 112 including a carrier frequency estimator 123, and the tunable local oscillator 113 together form a control loop for synchronizing the frequency of the local oscillator's output signal 122 to the center frequency f_{C,rx} of the received signal 12. For this reason the LO-signal 122 or frequency information thereof may be provided to the carrier frequency estimator 123, which may be implemented in the baseband processing part 112 in some examples. The local oscillator's 113 output signal 122 or the frequency information thereof may be used in the baseband processor 112 and/or the carrier frequency estimator 123 for clearing out ambiguous Doppler frequency offset estimates. In other examples the carrier frequency estimator 123 may also be realized by analog or digital circuitry comprised by the RF-front-end 111.

According to some examples the carrier frequency estimator 123 may perform a cell search procedure in order to derive a first estimate for the carrier frequency f_{C,rx} of the received signal 12. In LTE the cell search procedure is based on the use of primary and secondary synchronization signals. For the cell search the carrier frequency estimator 123 may be adapted to search for the primary synchronization signal at the center frequencies f_{C,tx} possible at the frequency band in question. For this purpose a control signal 124 may be used for controlling the tunable local oscillator 113 to the possible center frequencies f_{C,tx}. There exist three different possibilities for the primary synchronization signal as the primary synchronization signal may point to one of three Physical-layer Cell Identities (PCI). Once the primary synchronization signal has been detected, the mobile terminal may look for the secondary synchronization signal pointing at one of 168 PCI groups. Once one alternative for 168 possible secondary synchronization signals has been detected, the UE has figured out the PCI value from an address space of 504 IDs. From the PCI the UE may derive information about the parameters used for downlink reference signals and thus the UE may decode the PBCH (physical broadcast channel) carrying system information needed to access the mobile communications system.

After initial carrier frequency estimation the carrier frequency estimator 123 may be adapted, in one example, to output a non-vanishing control signal 124 in response to a detected a non-vanishing residual frequency offset in the down-converted digital baseband signal 121. In order to avoid ambiguities when estimating the residual frequency offset, frequency information of the LO-signal 122 may be used in the baseband part 112, 123. Thereby the residual frequency offset may e.g. be obtained by covariance methods, level-crossing rate methods or power-spectrum measurements. Based on the residual frequency offset the control signal 124 may be used for controlling or tuning the local oscillator 113 to the shifted center frequency f_{C,rx} of the received signal 12. In other words the processor 11 is adapted to synchronize, based on the received signal 12, the frequency of the tunable local oscillator 113 to the carrier frequency f_{C,rx} of the received signal 12 to obtain a synchronized frequency of the tunable local oscillator 113, which may then also be used as the estimate 17 of the received carrier frequency. As shown in Fig. 2, the synchronization may be achieved with a control loop similar to a phase-locked-loop (PLL), wherein the control loop comprises the RF front-end 111, the digital baseband processor 112 and the tunable local oscillator 113.

In the example depicted in Fig. 2 the carrier frequency estimator 123 resides in the digital baseband part 112 of the processor 11. The carrier frequency estimator 123 may, however, also be implemented by analog circuits residing in the radio frequency processing circuit 111. The carrier frequency estimator 123 is adapted to control the local oscillator 113 of the processor 11 in such a way that its output frequency coincides with the center or carrier frequency f_{C,rx} of the frequency-shifted received signal 12. The center frequency f_{C,rx} of the received signal 12 is the base station transmitter's carrier frequency f_{C,rx} plus the frequency offset f_{o,Doppler} caused by the Doppler effect.

According to the example of Fig. 2, the output signal 122 of the local oscillator 113 is fed, as the estimate 13 of the carrier frequency of the received signal, to the estimator 16 for estimating the frequency offset fₒ = f_{o,Doppler} based on the estimate 13 of the carrier frequency f_{C,rx} and based on the reference frequency f_{ref} of the reference signal 15 coming from the highly accurate reference signal source 14. The estimator 16 may be adapted to determine the estimate 17 for the frequency offset f_{o,Doppler} based on a difference between the synchronized frequency f_{LO} = (f_{C,tx} + f_{o,Doppler}) of the local oscillator 113 (or its output signal 122) and the reference frequency f_{ref} = f_{C,tx} of the reference signal 15. For this reason, examples of the estimator 16 may comprise a frequency comparator to determine the difference between the synchronized LO-frequency f_{LO} = (f_{C,tx} + f_{o,Doppler}) and the reference frequency f_{ref} = f_{C,tx}. In other words, in the frequency comparator 16 the variable frequency f_{LO} of the local oscillator's 113 output signal 122 is compared to the stable frequency f_{ref} of the highly accurate reference signal source or reference clock 14 in order to derive the frequency-offset-estimate 17. The frequency comparator 16 may be implemented using digital or analog circuits or combinations thereof.

According to examples the reference signal source 14 is adapted to generate the (independent) reference signal 15 such that its reference frequency f_{ref} corresponds to the carrier frequency f_{C,tx} of the transmitted signal within the range of ±0.1 ppm or, preferably, ±0.05 ppm. For this purpose the reference signal source 14 may comprise compensated crystal oscillators from the group of temperature compensated crystal oscillators (TCXO), microcomputer compensated crystal oscillators (MCXO) and/or Oven-Controlled Crystal Oscillator (OCXO). Because of the power required to run a heater, OCXOs require more power than oscillators that run at ambient temperature, and the requirement for the heater, thermal mass, and thermal insulation means that they are physically larger. Therefore OCXOs are typically not used in battery powered or miniature mobile terminals, such as mobile phones. Since in examples the apparatus 10 and, hence, the reference signal source 14 is implemented in an aircraft, there is no limitation with respect to battery power or size. The OCXO achieves the best frequency stability possible from a crystal. The short term frequency stability of OCXOs is typically 1x10⁻¹² over a few seconds, while the long term stability is limited to around 1x10⁻⁸ (10 ppb) per year by aging of the crystal. Achieving better performance requires switching to an atomic frequency standard, such as a rubidium standard, caesium standard, or hydrogen maser. Another cheaper alternative is to discipline a crystal oscillator with a GPS time signal, creating a so-called GPS Disciplined oscillator (GPSDO). Using an onboard GPS receiver of the aircraft that can generate accurate time signals (down to within -30 ns of UTC), a GPSDO can maintain oscillation accuracy of 10⁻¹³ for extended periods of time.

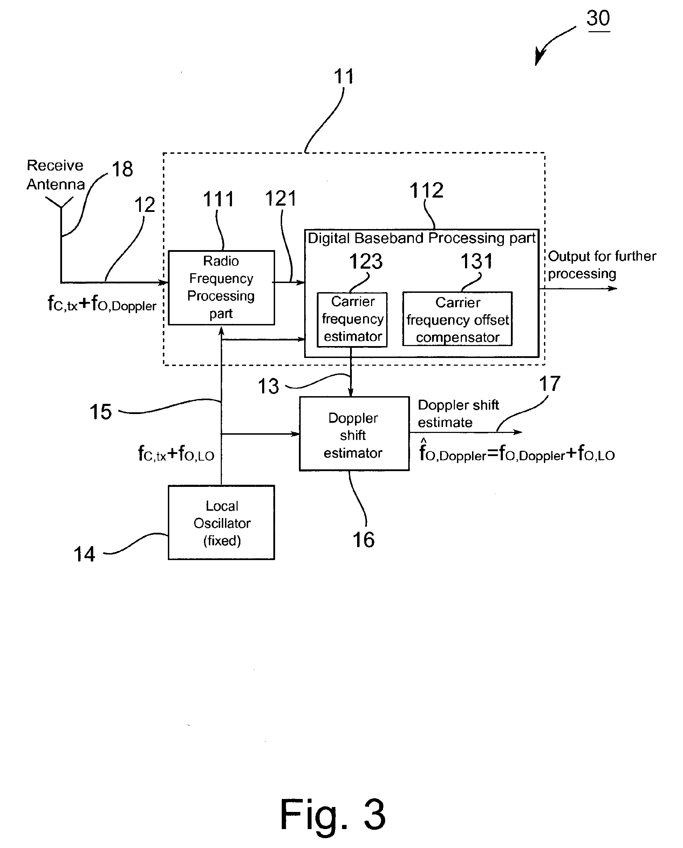

Turning now to Fig. 3 a further example of an apparatus 30 for determining an estimate 17 of a frequency offset fₒ between a carrier or center frequency f_{C,rx} of the received signal 12 and a carrier or center frequency f_{C,tx} of a transmitted signal will be explained. Again, the same reference numerals as in Fig. 1 and/or Fig. 2 indicate similar functional components and/or signals.

As well as the apparatus 10 and the apparatus 20, the apparatus 30 may be incorporated in an aircraft onboard terminal for a DA2G communication with a base station of a terrestrial mobile communications network. The apparatus 30 differs from the apparatus 20 in that the down-conversion of the received (uplink) signal 12 to the baseband domain is done by mixing the received signal 12 with a fixed-frequency reference signal 15 instead of mixing the received signal 12 with a variable output of a tunable local oscillator. In the example of Fig. 3 the independent reference signal source 14 comprises a local oscillator with a fixed reference frequency f_{ref}. The fixed reference frequency f_{ref} may correspond to the transmitted carrier or center frequency f_{C,tx} - at least within a predefined tolerance range, i.e., f_{ref} = f_{C,tx} + Δf_{ref}. Slight variations Δf_{ref} from the nominal transmit carrier frequency f_{C,tx} within a range of ±0.05 ppm are hardly avoidable - even with high-precision reference signal sources 14, like the above-mentioned TCXOs, MCXOs, OCXOs, and GPSDOs. Again the reference signal source 14 may be adapted to generate the reference signal 15 independently from other signal or clock sources used to process the received signal 12.

The output signal 15 of the reference signal source 14, i.e. the fixed local oscillator, has the reference frequency f_{ref} = f_{C,tx} + Δf_{ref}, wherein Δf_{ref} denote oscillator frequency variations with the predefined tolerance range. The output signal 15 of the reference signal source 14 is fed to the RF-processing block 111 in order to down-convert the received signal 12 having the received signal frequency f_{C,rx} = f_{C,tx} + f_{o,Doppler}. The resulting down-converted baseband signal 121 having the baseband frequency offset fₒ = f_{C,rx} - f_{ref} = f_{o,Doppler} - Δf_{ref} is then fed to the digital baseband processor 112 for carrier or Doppler frequency estimation. The digital baseband processor 112 is adapted to estimate the received carrier frequency f_{C,rx} by means of a carrier frequency estimator 123 which may be implemented by digital baseband processing algorithms. A coarse estimate 13 for the carrier frequency f_{C,rx} may e.g. be obtained by the above-explained cell search procedures using primary and/or secondary synchronization signals comprised by the received signal 12 and, hence, the down-converted baseband signal 121. Also the frequency f_{ref} of the reference signal source 14 may be chosen based on an outcome of said cell search procedure. As has already be explained above, frequency information of the reference signal 15 may be used in the baseband part 112, 123 in order to avoid or clear out ambiguities when estimating the carrier frequency or the Doppler frequency offset, the frequency information of the reference signal 15 indicating its reference frequency f_{ref} = f_{C,tx} + Δf_{ref}. The estimate 13 of the received signal carrier frequency f_{C,rx} serves as a first input to the estimator 16, which may be implemented in the baseband domain. The reference signal 15 having the reference frequency f_{ref} = f_{C,tx} + Δf_{ref} or frequency information thereof serves a second input to the frequency-offset-estimator 16. Based on the first and the second input 13, 15 the frequency-offset-estimator 16 may perform an estimation of the frequency offset fₒ, which is a combination of the Doppler frequency shift f_{o,Doppler} and the local oscillator frequency variation Δf_{ref}.

In the example of Fig. 3 the carrier frequency offset from the Doppler shift f_{o,Doppler} plus any offset Δf_{ref} coming from an inaccuracy of the reference signal source 14 is not compensated by tuning a local oscillator that is used as a reference for the analog radio frequency and digital baseband processing parts 111 and 112. However, the frequency offset fₒ may be fully compensated by a carrier frequency offset compensator 131 in the digital domain by appropriate algorithms. Hence, for the carrier frequency offset compensation examples of apparatus 30 in the mobile terminal further comprise a frequency offset compensator 131 being adapted to configure a carrier frequency of a reverse link (uplink) radio signal based on the estimated frequency offset 17 and a transmitter for transmitting the reverse link radio signal via a reverse communication link (uplink) to an origin of the transmitted signal, i.e. a ground-located base station. The output 13 from the carrier frequency estimator 123 may be directly compared to the frequency f_{ref} = f_{C,tx} + Δf_{ref} of the reference local oscillator 14 to obtain the estimate 17 of the Doppler shift f_{o,Doppler}. In this implementation the reference local oscillator 14 should possibly be accurate enough such that there is negligible frequency offset Δf_{ref} in addition to the frequency offset caused by the Doppler shift. Otherwise, the frequency compensation for the uplink transmission by -2f_{o,Doppler} in case of TDD and by -(f_{o,Doppler} + f_{o,Doppler,UL}) in case of FDD leads to a remaining offset of ±Δf_{ref} at the base station uplink receiver. Thereby the uplink Doppler shift estimate f_{o,Doppler,UL} may be derived from the downlink Doppler shift estimate f_{o,Doppler} by accounting for a duplex frequency offset Δf_{FDD} between the defined downlink and uplink carrier frequencies f_{C,tx,DL}, f_{C,tx,UL}, i.e. f_{o,Doppler,UL} = f_{o,Doppler}f_{C,tx,UL}/f_{C,tx,DL}.

Note that in examples the frequency accuracy that needs to be achieved by the highly accurate reference signal source 14 and/or the local oscillator 113 comprised by the aircraft's onboard terminal receiver should be such that unwanted frequency offsets Δf_{ref} due to oscillator inaccuracies are tolerable with in defined performance bounds in the processing chains of the terminals downlink receiver, its uplink transmitter as well as the base station's uplink receiver. Furthermore, the accuracy of a local oscillator at the ground-located base station used to generate the downlink signal is assumed to be a high enough such that any frequency offsets coming therefrom are negligible.

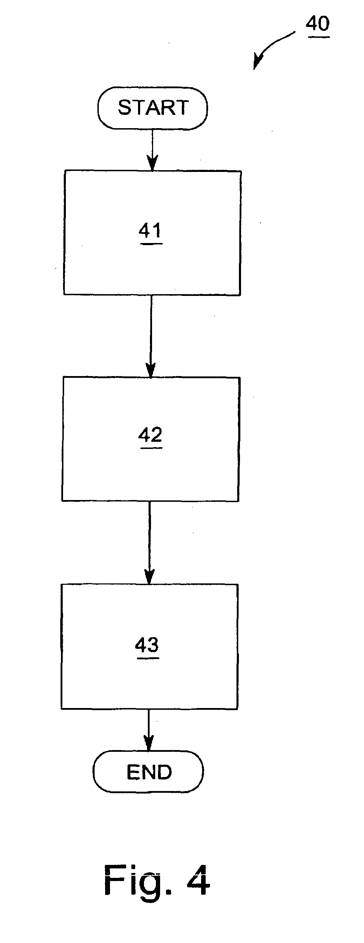

Examples may also comprise a method for determining an estimate of a frequency offset between a carrier frequency of a received signal and a carrier frequency of a transmitted signal. An example of such a method 40 is depicted in the schematic block-diagram of Fig. 4.

The method 40 for determining the frequency-offset-estimate comprises, in a first step 41, determining, based on the received signal 12, an estimate of the carrier frequency f_{C,rx} of the received signal 12. As has been explained before in the examples according to Fig. 2 and Fig. 3, this may be done with the processor 11 which may have RF- and baseband processing parts 111, 112 and 113. Further, the method 40 comprises a step 42 of generating a reference signal 15 having a reference frequency f_{ref} corresponding, within a predefined tolerance range Δf_{ref}, to the carrier frequency f_{C,tx} of the transmitted signal. Thereby, the reference signal 15 is generated with a highly accurate reference signal source 14 comprising, e.g., highly stable oscillators with a frequency stability which is comparable to high-accuracy reference signal sources commonly used in base stations. In a further step 43 the frequency offset fₒ is estimated based on the estimated carrier frequency f_{C,rx} of the received signal 12 and the reference frequency f_{ref} of the generated reference signal 15. Possible physical realizations of said estimation step have been explained with reference to Figs. 2 and 3.

A person of skill in the art would readily recognize that steps of various above-described methods can be also performed by programmed computers or signal processors. Herein, some examples are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The examples are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

The functions of the various elements shown in the figures, including any functional blocks labeled as "processor", "signal source" or "estimator", may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A mobile terminal apparatus (10; 20; 30) for an aircraft and adapted to determine an estimate (17) of a Doppler frequency offset (17) between a carrier frequency of a received signal (12) received at the mobile terminal and a known carrier frequency of a transmitted signal transmitted from a ground-located base station, wherein the received signal (12) is a version of the transmitted signal compromised by a wireless direct air-to-ground communications channel between the mobile terminal apparatus in the aircraft and the ground-located base station, the mobile terminal apparatus comprising:
a processor (11) for determining, based on the received signal (12), an estimate (13) of the carrier frequency of the received signal (12);
a reference signal source (14) for generating a reference signal (15) having a reference frequency corresponding to the known carrier frequency of the transmitted signal within a frequency tolerance range of ± 0.1 ppm: and
an estimator (16) for estimating the Doppler frequency offset (17) based on the estimated carrier frequency (13) of the received signal (12) and the reference frequency of the reference signal (15).

2. The mobile terminal apparatus (10; 20; 30) according to claim 1, wherein the processor (11) is adapted to determine the estimate (13) of the carrier frequency of the received signal (12) based on a center frequency of a received signal frequency spectrum.

3. The mobile terminal apparatus (10; 20) according to claim 1, wherein the processor (11) is adapted to synchronize, based on the received signal (12), a frequency of a tunable local oscillator (113) to the carrier frequency of the received signal (12) to obtain a synchronized frequency of the tunable local oscillator (113) as the estimate (13) of the carrier frequency.

4. The mobile terminal apparatus (10; 20) according to claim 3, wherein the estimator (16) is adapted to estimate the Doppler frequency offset based on a difference between the synchronized frequency of the tunable local oscillator (113) and the reference frequency of the reference signal (15).

5. The mobile terminal apparatus (10; 20) according to claim 4, wherein the estimator (16) comprises a frequency comparator to determine the difference between the synchronized frequency and the reference frequency.

6. The mobile terminal apparatus (30) according to claim 1, wherein the processor (11) is adapted to determine the estimate (13) of the carrier frequency of the received signal (12) based on the reference signal (15) and a down-converted signal (121), which is obtained based on mixing the reference signal (15) with the received signal (12).

7. The mobile terminal apparatus (10; 20; 30) according to claim 1, wherein the reference signal source (14) is adapted to generate the reference signal (15) such that its reference frequency corresponds to the known carrier frequency of the transmitted signal within a range of ± 0.05 ppm.

8. The mobile terminal apparatus (10; 20; 30) according to claim 1, wherein the reference signal source (14) is adapted to generate the reference signal (15) independently from other signal sources used to process the received signal (12).

9. The mobile terminal apparatus (10; 20; 30) according to claim 1, further comprising
a transmitter for transmitting a radio signal via a reverse communication link to the ground-located base station; and
a frequency offset compensator (131) being adapted to configure a carrier frequency of the radio signal based on the estimated Doppler frequency offset (17).

10. The mobile terminal apparatus (10; 20; 30) according to claim 1, wherein the transmitted signal is a code division multiplexing signal or an orthogonal frequency division multiplexing signal.

11. An aircraft comprising the mobile terminal apparatus (10; 20; 30) according to claim 1 for a direct air-to-ground communication using a terrestrial mobile communications network.

12. A method (40) for determining an estimate (17) of a frequency Doppler offset between a carrier frequency of a received signal (12) received at a mobile terminal in an aircraft and a known carrier frequency of a transmitted signal transmitted from a ground-located base station, wherein the received signal (12) is a version of the transmitted signal compromised by a wireless direct air-to-ground communications channel between the mobile terminal in the aircraft and the ground-located base station, the method comprising:
determining (41), based on the received signal (12), an estimate (13) of the carrier frequency of the received signal (12);
generating (42) a reference signal (15) having a reference frequency corresponding to the known carrier frequency of the transmitted signal within a tolerance range of ± 0.1 ppm; and
estimating (43) the Doppler frequency offset based on the estimated carrier frequency (13) of the received signal (12) and the reference frequency of the reference signal (15).

13. A computer program having a program code for performing the method of claim 12 when the computer program is executed on a computer or processor.

## Patentansprüche

1. Mobile Vorrichtung (10; 20; 30) für ein Flugzeug und ausgelegt für das Bestimmen einer Schätzung (17) eines Dopplerfrequenzversatzes (17) zwischen einer Trägerfrequenz eines empfangenen Signals (12), empfangen vom Mobilendgerät, und einer bekannten Trägerfrequenz eines von einer am Boden befindlichen Basisstation übertragenen Signals, wobei das empfangene Signal (12) eine Version eines übertragenen Signals ist, beeinträchtigt von einem drahtlosen, direkten Bord-Boden-Kommunikationskanal zwischen der mobilen Endgerätvorrichtung im Flugzeug und der am Boden befindlichen Basisstation, wobei die mobile Endgerätvorrichtung umfasst:
Prozessor (11) zum Bestimmen einer Schätzung (13) der Trägerfrequenz des empfangenen Signals (12) auf der Grundlage des empfangenen Signals (12);
Referenzsignalquelle (14) zum Generieren eines Referenzsignals (15) mit einer Referenzfrequenz, die der bekannten Trägerfrequenz des übertragenen Signals innerhalb eines Toleranzspielraums von ± 0,1 ppm entspricht; und
Schätzer (16) für das Schätzen des Dopplerfrequenzversatzes (17) auf der Grundlage der geschätzten Trägerfrequenz (13) des empfangenen Signals (12) und der Referenzfrequenz des Referenzsignals (15).

2. Mobile Endgerätvorrichtung (10; 20; 30) nach Anspruch 1, wobei der Prozessor (11) dafür ausgelegt ist, um auf der Grundlage einer Zentralfrequenz eines empfangenen Signalfrequenzspektrums die Schätzung (13) der Trägerfrequenz des empfangenen Signals (12) zu bestimmen.

3. Mobile Endgerätvorrichtung (10; 20) nach Anspruch 1, wobei der Prozessor (11) dafür ausgelegt ist, um auf der Grundlagen des empfangenen Signals (12) eine Frequenz eines abstimmbaren Lokaloszillators (113) mit der Trägerfrequenz des empfangenen Signals (12) zu synchronisieren, um eine synchronisierte Frequenz des abstimmbaren Lokaloszillators (113) als Schätzung (13) der Trägerfrequenz zu erhalten.

4. Mobile Endgerätvorrichtung (10; 20) nach Anspruch 3, wobei der Schätzer (16) ausgelegt ist für das Schätzen des Dopplerfrequenzversatzes auf der Grundlage einer Abweichung zwischen der synchronisierten Frequenz des abstimmbaren Lokaloszillators (113) und der Referenzfrequenz des Referenzsignals (15).

5. Mobile Endgerätvorrichtung (10; 20) nach Anspruch 4, wobei der Schätzer (16) einen Frequenzkomparator zum Bestimmen der Abweichung zwischen der synchronisierten Frequenz und der Referenzfrequenz umfasst.

6. Mobile Endgerätvorrichtung (30) nach Anspruch 1, wobei der Prozessor (11) ausgelegt ist für das Bestimmen der Schätzung (13) der Trägerfrequenz des empfangenen Signals (12), basierend auf dem Referenzsignal (15) und einem herunterkonvertierten Signal (121), welches erlangt wurde auf der Grundlage des Vermischens des Referenzsignals (15) mit dem empfangenen Signal (12).

7. Mobile Endgerätvorrichtung (10; 20; 30) nach Anspruch 1, wobei die Referenzsignalquelle (14) ausgelegt ist für das Generieren des Referenzsignals (15), so dass dessen Referenzfrequenz innerhalb einer Bandbreite von 0,05 ppm der bekannten Trägerfrequenz des übertragenen Signals entspricht.

8. Mobile Endgerätvorrichtung (10; 20; 30) nach Anspruch 1, wobei die Referenzsignalquelle (14) ausgelegt ist für das Generieren des Referenzsignals (15), unabhängig von anderen Signalquellen, die zur Verarbeitung des empfangenen Signals (12) verwendet werden.

9. Mobile Endgerätvorrichtung (10; 20; 30) nach Anspruch 1, weiterhin umfassend:
Sender für das Übertragen eines Funksignals über eine Reverse-Kommunikationsverbindung an die am Boden befindliche Basisstation; und
Frequenzverschiebungskompensator (131), ausgelegt für das Konfigurieren einer Trägerfrequenz des Funksignals auf der Grundlage des geschätzten Dopplerfrequenzversatzes (17)

10. Mobile Endgerätvorrichtung (10; 20; 30) nach Anspruch 1, wobei das übermittelte Signal ein Codemultiplexsignal oder ein orthogonales Frequenzmultiplexsignal ist.

11. Flugzeug, für eine direkte Bord-Boden-Kommunikation unter Verwendung eines terrestrischen mobilen Kommunikationsnetzwerks die mobile Endgerätvorrichtung (10; 20; 30) nach Anspruch 1 umfassend.

12. Verfahren (40) zum Bestimmen einer Schätzung (17) eines Dopplerfrequenzversatzes zwischen einer Trägerfrequenz eines empfangenen Signals (12), empfangen von einem Mobilendgerät in einem Flugzeug, und einer bekannten Trägerfrequenz eines von einer am Boden befindlichen Basisstation übertragenen Signals, wobei das empfangene Signal (12) eine Version eines übertragenen Signals ist, beeinträchtigt von einem drahtlosen, direkten Bord-Boden-Kommunikationskanal zwischen dem mobilen Endgerät im Flugzeug und der am Boden befindlichen Basisstation, wobei das Verfahren umfasst:
Bestimmen (41) einer Schätzung (13) der Trägerfrequenz des empfangenen Signals (12) auf der Grundlage des empfangenen Signals (12);
Generieren (42) eines Referenzsignals (15) mit einer Referenzfrequenz, die der bekannten Trägerfrequenz des übertragenen Signals innerhalb eines Toleranzspielraums von ± 0,1 ppm entspricht; und
Schätzen (43) des Dopplerfrequenzversatzes auf der Grundlage der geschätzten Trägerfrequenz (13) des empfangenen Signals (12) und der Referenzfrequenz des Referenzsignals (15).

13. Computerprogramm mit einem Programmcode zur Umsetzung des Verfahrens nach Anspruch 12, wenn das Computerprogramm auf einem Computer oder mit einem Prozessor ausgeführt wird.

## Revendications

1. Appareil terminal mobile (10 ; 20 ; 30) pour un aéronef et adapté pour déterminer une estimation (17) d'un décalage de fréquence Doppler (17) entre une fréquence porteuse d'un signal reçu (12) reçu au niveau du terminal mobile et une fréquence porteuse connue d'un signal émis, émis depuis une station de base localisée au sol, le signal reçu (12) étant une version du signal émis compromise par un canal de communications air-sol direct sans fil entre l'appareil terminal mobile dans l'aéronef et la station de base localisée au sol, l'appareil terminal mobile comprenant :
un processeur (11) destiné à déterminer, en se basant sur le signal reçu (12), une estimation (13) de la fréquence porteuse du signal reçu (12) ;
une source de signal de référence (14) destinée à générer un signal de référence (15) possédant une fréquence de référence correspondant à la fréquence porteuse connue du signal émis au sein d'une plage de tolérance de fréquence de ± 0,1 ppm ; et
un estimateur (16) destiné à estimer le décalage de fréquence Doppler (17) en se basant sur la fréquence porteuse estimée (13) du signal reçu (12) et la fréquence de référence du signal de référence (15).

2. Appareil terminal mobile (10; 20; 30) selon la revendication 1, avec lequel le processeur (11) est adapté pour déterminer l'estimation (13) de la fréquence porteuse du signal reçu (12) en se basant sur une fréquence centrale d'un spectre de fréquences de signal reçu.

3. Appareil terminal mobile (10; 20) selon la revendication 1, avec lequel le processeur (11) est adapté pour synchroniser, en se basant sur le signal reçu (12), une fréquence d'un oscillateur local accordable (113) sur la fréquence porteuse du signal reçu (12) afin d'obtenir une fréquence synchronisée de l'oscillateur local accordable (113) en tant qu'estimation (13) de la fréquence porteuse.

4. Appareil terminal mobile (10 ; 20) selon la revendication 3, avec lequel l'estimateur (16) est adapté pour estimer le décalage de fréquence Doppler en se basant sur une différence entre la fréquence synchronisée de l'oscillateur local accordable (113) et la fréquence de référence du signal de référence (15).

5. Appareil terminal mobile (10 ; 20) selon la revendication 4, avec lequel l'estimateur (16) comprend un comparateur de fréquence pour déterminer la différence entre la fréquence synchronisée et la fréquence de référence.

6. Appareil terminal mobile (30) selon la revendication 1, avec lequel le processeur (11) est adapté pour déterminer l'estimation (13) de la fréquence porteuse du signal reçu (12) en se basant sur le signal de référence (15) et un signal abaissé à une fréquence inférieure (121) qui est obtenu en se basant sur un mélange du signal de référence (15) avec le signal reçu (12).

7. Appareil terminal mobile (10; 20; 30) selon la revendication 1, avec lequel la source de signal de référence (14) est adaptée pour générer le signal de référence (15) de telle sorte que sa fréquence de référence corresponde à la fréquence porteuse connue du signal émis avec une tolérance de ± 0,05 ppm.

8. Appareil terminal mobile (10; 20; 30) selon la revendication 1, avec lequel la source de signal de référence (14) est adaptée pour générer le signal de référence (15) indépendamment d'autres sources de signal utilisées pour traiter le signal reçu (12).

9. Appareil terminal mobile (10 ; 20 ; 30) selon la revendication 1, comprenant en outre
un émetteur destiné à émettre un signal hertzien par le biais d'une liaison de communication de retour vers la station de base localisée au sol ; et
un compensateur de décalage de fréquence (131) qui est adapté pour configurer une fréquence porteuse du signal hertzien en se basant sur le décalage de fréquence Doppler (17) estimé.

10. Appareil terminal mobile (10 ; 20 ; 30) selon la revendication 1, avec lequel le signal émis est un signal multiplexé par répartition en code ou un signal multiplexé par répartition orthogonale de la fréquence.

11. Aéronef comprenant l'appareil terminal mobile (10 ; 20 ; 30) selon la revendication 1 pour une communication air-sol directe en utilisant un réseau de communication mobile terrestre.

12. Procédé (40) pour déterminer une estimation (17) d'un décalage de fréquence Doppler entre une fréquence porteuse d'un signal reçu (12) reçu au niveau d'un terminal mobile dans un aéronef et une fréquence porteuse connue d'un signal émis, émis depuis une station de base localisée au sol, le signal reçu (12) étant une version du signal émis compromise par un canal de communications air-sol direct sans fil entre le terminal mobile dans l'aéronef et la station de base localisée au sol, le procédé comprenant les étapes suivantes :
déterminer (41), en se basant sur le signal reçu (12), une estimation (13) de la fréquence porteuse du signal reçu (12) ;
générer (42) un signal de référence (15) possédant une fréquence de référence correspondant à la fréquence porteuse connue du signal émis au sein d'une plage de tolérance de fréquence de ± 0,1 ppm ; et
estimer (43) le décalage de fréquence Doppler en se basant sur la fréquence porteuse estimée (13) du signal reçu (12) et la fréquence de référence du signal de référence (15).

13. Programme informatique possédant un code de programme pour mettre en oeuvre le procédé selon la revendication 12 lorsque le programme informatique est exécuté sur un ordinateur ou un processeur.
